# EUROPÄISCHE PATENTSCHRIFT

(11) **EP 0 986 496 B1**
(45) Veröffentlichungstag und Bekanntmachung des Hinweises auf die Patenterteilung: **30.09.2009**
(21) Anmeldenummer: 98966557.5
(22) Anmeldetag: 18.12.1998
(51) Int. Cl.: B60S 1/38

(54) **WISCHBLATT FÜR SCHEIBEN VON KRAFTFAHRZEUGEN**
WIPER BLADE FOR MOTOR VEHICLE WINDOWS
RACLETTE D'ESSUIE-GLACE POUR VITRES DE VEHICULES AUTOMOBILES

(30) Priorität: 01.04.1998 DE 19814610
(43) Veröffentlichungstag der Anmeldung: 22.03.2000
(73) Patentinhaber: ROBERT BOSCH GMBH, 70442 Stuttgart (DE)
(72) Erfinder: KOTLARSKI, Thomas, D-77830 Bühlertal (DE)
(86) Internationale Anmeldenummer: PCT/DE1998/003721
(87) Internationale Veröffentlichungsnummer: WO 1999/051470

(56) Entgegenhaltungen:
- EP-A- 0 279 640
- EP-A- 0 528 643
- US-A- 4 343 063

## Beschreibung

### Stand der Technik

Bei Wischersystemen mit Wischblättern der im Oberbegriff des Anspruchs 1 bezeichneten Art soll das Tragelement über das gesamte vom Wischblatt bestrichene Wischfeld eine vorbestimmte Verteilung der vom Wischerarm ausgehenden Wischblatt-Anpresskraft - oft auch als Anpressdruck bezeichnet - an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muss also etwas stärker sein als die im Wischfeld an der zu wischenden Scheibe gemessene stärkste Krümmung. Das Tragelement ersetzt somit die aufwendige Tragbügelkonstruktion mit zwei in der Wischleiste angeordneten Federschienen, wie sie bei herkömmlichen Wischblättern praktiziert wird (DE-OS 15 05 397).

Die Erfindung geht aus von einem Wischersystem mit einem Wischblatt nach dem Oberbegriff des Anspruchs 1. Bei bekannten Wischblättem dieser Art (DE-PS 12 47 161 oder EP 279640 A) sind zur Erzielung einer möglichst gleichmäßigen Druckbelastung des Wischblatts an einer ebenen Scheibe über seine gesamte Länge mehrere Ausgestaltungen des Tragelements als Problemlösung vorgesehen.

Bei einem anderen bekannten Wischblatt gemäß der Gattung des Anspruchs 1 (EP 05 28 643 B1) nimmt - zur Erzielung einer gleichmäßigen Druckbelastung des Wischblatts an sphärisch gekrümmten Scheiben - die Druckbelastung an den beiden Endabschnitten wesentlich zu, wenn das Wischblatt auf eine ebene Scheibe gepreßt wird.

Die in beiden Fällen angestrebte gleichmäßige Druckverteilung über die gesamte Wischblattlänge führt jedoch zu einem schlagartigen Umspringen der zum Wischblatt gehörenden, die eigentliche Wischarbeit ausführenden Wischlippe über deren gesamte Länge aus ihrer einen in ihre andere Schlepplage, wenn das Wischblatt seine Arbeitsrichtung umkehrt. Diese Schlepplage ist unabdingbar für einen effektiven und geräuscharmen Betrieb der Wischanlage. Das schlagartige Umspringen der Wischlippe - welches zwangsläufig mit einer Auf- Abbewegung des Wischblatts verbunden ist - erzeugt jedoch unerwünschte Klopfgeräusche. Auch ist die Abstimmung der Tragelementspannung auf die gewünschte, von Fall zu Fall andersartige Druckverteilung bei sphärisch gekrümmten Scheiben problematisch.

### Vorteile der Erfindung

Bei dem erfindungsgemäßen Wischblatt mit den Merkmalen des Anspruchs 1 ergibt sich im Bereich der verminderten Anlegekraft eine steilere Schlepplage der Wischlippe gegenüber dem Bereich mit der größeren Anlagekraft. Diese steilere Stellung der Wischlippe begünstigt deren Umlegevorgang in den Wischrichtungsumkehrpositionen des Wischblatts, welcher dort eingeleitet wird und sich dann in den Bereich mit der größeren Anlegekraft fortsetzt. Dadurch wird das schlagartige Umschnappen der gesamten Wischlippe und das damit verbundene störende Klopfgeräusch vermieden. Auch entfallen die Probleme bei der Auslegung des Tragelements hinsichtlich der Anlagedruckverteilung bei sphärisch gekrümmten Scheiben. Es hat sich nämlich gezeigt, daß mit der Verringerung des Anlegedrucks am Endabschnitt des Wischblatts nicht zwangsläufig auch eine Minderung der Wischqualität einhergeht.

Besonders vorteilhaft ist es, wenn der Anlegedruck der Wischleiste an der Scheibe an deren beiden Endabschnitten kleiner ist als in deren Mittelabschnitt, weil dann der Umlegevorgang der Wischlippe von beiden Enden her erfolgt und dadurch schneller abgeschlossen ist.

Bei besonders problematischen Scheibenkrümmungen kann es zweckdienlich sein, wenn der Anlegedruck der Wischleiste an der Scheibe in deren Mittelabschnitt zumindest annähernd gleichbleibend groß ist und an dem Endabschnitt/den Endabschnitten abfällt.

Eine bevorzugte Ausführung des Tragelements zum Erreichen der angestrebten Verteilung des Anlegedrucks sieht vor, daß das Tragelement an seiner der Scheibe zugewandten Seite eine Hohlkrümmung aufweist, die stärker ist als die stärkste Krümmung der sphärisch gekrümmten Scheibe im Bereich des vom Wischblatt überstreichbaren Wischfeldes und daß die Hohlkrümmung im Mittelabschnitt des Tragelements stärker ist als an dessen Endabschnitt/Endabschnitten. Weitere vorteilhafte Weiterbildungen und Ausgestaltungen der Erfindung sind in der nachfolgenden Beschreibung eines in der dazugehörigen Zeichnung dargestellten Ausführungsbeispiels angegeben.

### Zeichnung

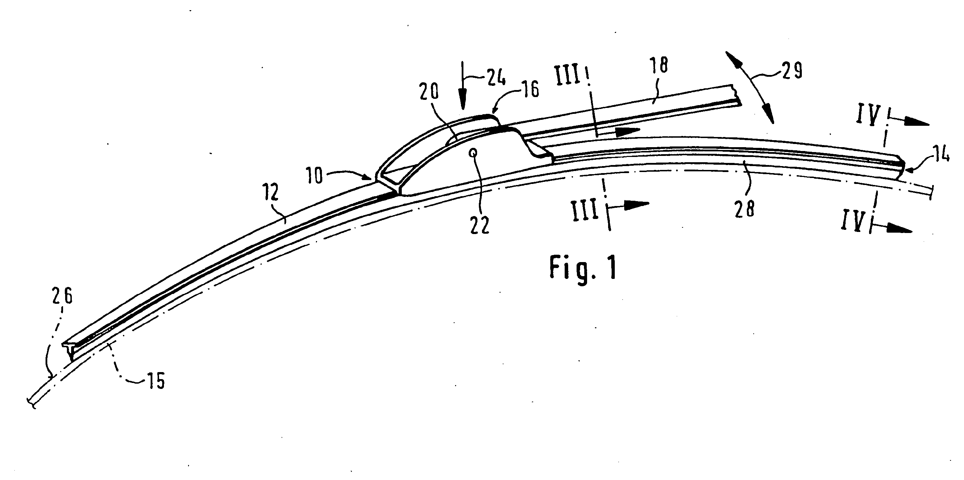

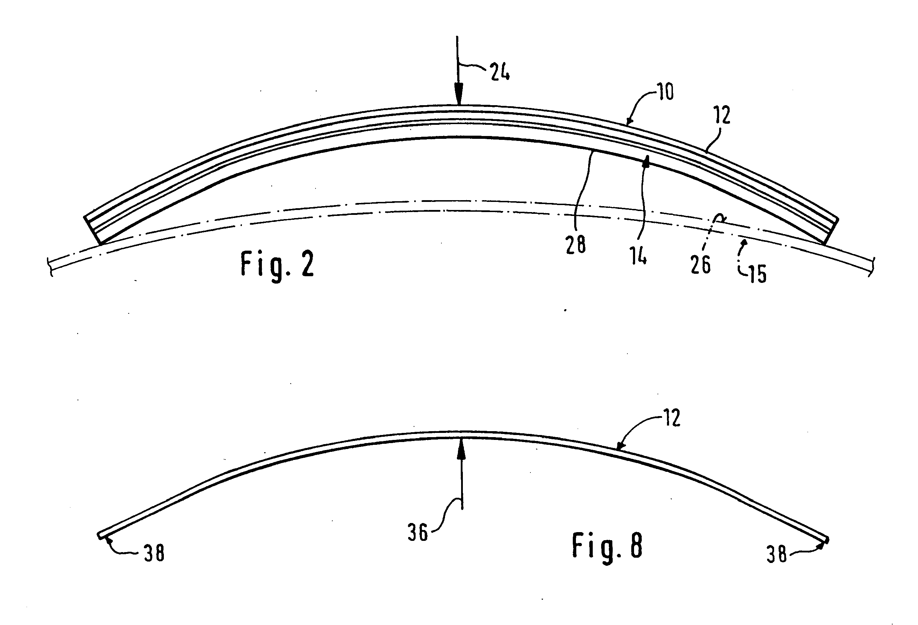

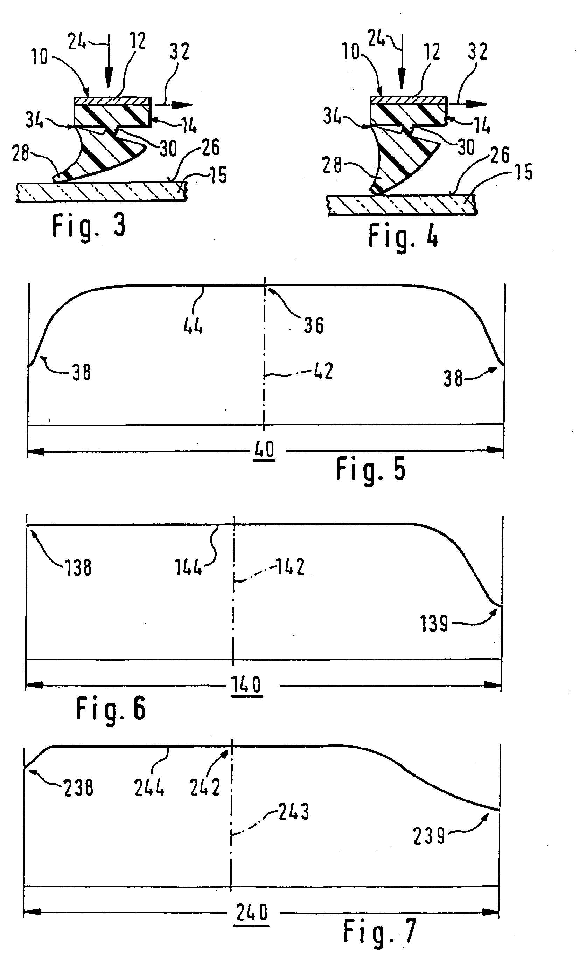

In der Zeichnung zeigen: Figur 1 eine perspektivische Darstellung eines an der Scheibe angelegten, mit einem zur Scheibe belasteten Wischerarm verbundenen Wischblatts, Figur 2 eine Prinzipdarstellung einer Seitenansicht eines unbelastet auf die Scheibe aufgesetzten Wischblatts, gegenüber Figur 1 verkleinert dargestellt, Figur 3 die Schnittfläche eines Schnitts durch das Wischblatt gemäß Figur 1, entlang der Linie III-III in vergrößerter Darstellung, Figur 4 die Schnittfläche eines Schnitts durch das Wischblatt gemäß Figur 1 entlang der Linie IV-IV in vergrößerter Darstellung, Figur 5 eine graphische Darstellung des Wischblatt-Anlegedrucks über die Wischblattlänge, gemäß einer ersten möglichen Ausführungsform der Erfindung, Figur 6 eine graphische Darstellung des Wischblatt-Anlegedrucks über die Wischblattlänge, gemäß einer anderen möglichen Ausführungsform der Erfindung, Figur 7 eine graphische Darstellung des Wischblatt-Anlegedrucks über die Wischblattlänge, gemäß einer weiteren möglichen Ausführungsform der Erfindung und Figur 8 eine unmaßstäbliche Prinzipdarstellung eines zum Wischblatt gehörenden Tragelements in Seitenansicht.

### Beschreibung des Ausführungsbeispiels

Ein in Figur 1 dargestelltes Wischblatt 10 weist ein langgestrecktes, federelastisches Tragelement 12 für eine Wischleiste 14 auf, das in Figur 8 separat dargestellt ist. Wie aus den Figuren 1, 3 und 4 ersichtlich ist, sind das Tragelement 12 und die Wischleiste 14 längsachsenparallel miteinander verbunden. An der von der zu wischenden Scheibe 15 - in Figur 1 strichpunktiert gezeichnet - abgewandten Oberseite des Tragelements 12 ist eine Anschlußvorrichtung 16 angeordnet, mit deren Hilfe das Wischblatt 10 mit einem an der Karosserie eines Kraftfahrzeugs geführten, angetriebenen Wischerarm 18 lösbar verbunden werden kann. An der der Scheibe 15 zugewandten Unterseite des Tragelements 12 ist die langgestreckte, gummielastische Wischleiste 14 angeordnet. An dem freien Ende 20 des Wischarms 18 ist ein als Gegenanschlußmittel dienender Haken angeformt, welcher einen zur Anschlußvorrichtung 16 des Wischblatts 10 gehörenden Gelenkbolzen 22 umgreift. Die Sicherung zwischen dem Wischerarm 18 und dem Wischblatt 10 wird durch nicht näher dargestellte, an sich bekannte, als Adapter ausgebildete Sicherungsmittel übernommen. Der Wischerarm 18 und damit auch dessen Hakenende 20 sind in Richtung des Pfeiles 24 zur zu wischenden Scheibe 15 belastet, deren zu wischende Oberfläche in den Figuren 1 und 2 durch eine strichpunktierte Linie 26 angedeutet ist. Die Kraft (Pfeil 24) legt das Wischblatt 10 über dessen gesamte Länge an der Oberfläche 26 der zu wischenden Scheibe 15 an. Da die in Figur 2 dargestellte strichpunktierte Linie 26 die stärkste Krümmung der Scheibenoberfläche im Bereich des Wischfeldes darstellen soll ist klar ersichtlich, daß die Krümmung des mit seinen beiden Enden an der Scheibe anliegenden, noch unbelasteten Wischblatts 10 stärker ist als die maximale Krümmung der sphärisch gekrümmten Scheibe 15. Unter dem Anpressdruck (Pfeil 24) legt sich das Wischblatt 10 mit seiner zur Wischleiste 14 gehörenden Wischlippe 28 über seine gesamte Länge an der Scheibenoberfläche 26 an. Dabei baut sich im bandartigen federelastischen Tragelement 12 eine Spannung auf, welche für eine ordnungsgemäße Anlage der Wischleiste 14 bzw. der Wischlippe 28 über deren gesamte Länge an der Kraftfahrzeugscheibe 15 sorgt. Während des Wischbetriebs bewegt der Wischerarm 18 das Wischblatt 10 quer zu dessen Längserstreckung über die Scheibe 15. Diese Wisch- oder Arbeitsbewegung ist in Figur 1 mit dem Doppelpfeil 29 bezeichnet.

Im folgenden soll nun auf die besondere Ausgestaltung des erfindungsgemäßen Wischblatts näher eingegangen werden. Wie die unmaßstäblich dargestellten Figuren 3 und 4 zeigen, ist die Wischleiste 14 an der unteren, der Scheibe 15 zugewandten Bandfläche des Tragelements 12 angeordnet. Mit Abstand von dem Tragelement 12 ist die Wischleiste 14 von ihren beiden Längsseiten her so eingeschnürt, daß in ihrem Längsmittelbereich ein Kippsteg 30 verbleibt, der sich über die gesamte Länge der Wischleiste 14 erstreckt. Der Kippsteg 30 geht in die Wischlippe 28 über, die einen im wesentlichen keilförmigen Querschnitt aufweist. Durch die Anlegekraft (Pfeil 24) wird das Wischblatt beziehungsweise die Wischlippe 28 gegen die zu wischende Oberfläche 26 der Scheibe 15 gedrückt, wobei sie unter dem Einfluß der Wischbewegung - von der in den Figuren 3 und 4 speziell die eine der beiden gegenläufigen Wischbewegungen (Doppelpfeil 29) betrachtet wird und die durch den Richtungspfeil 32 angedeutet ist - in eine sogenannte Schlepplage kippt, in der sich die Wischlippe an dem am Tragelement 12 gehaltenen Teil der Wischleiste 14 über ihre gesamte Länge abstützt. Dieser Abstützung welche in den Figuren 3 und 4 mit dem Pfeil 34 gekennzeichnet ist erfolgt stets - in Abhängigkeit von der jeweiligen Wischrichtung (Doppelpfeil 29 bzw. Pfeil 32) an der in der jeweiligen Wischrichtung hintenliegenden Oberkante der Wischlippe 28, sodaß diese stets in einer sogenannten Schlepplage über die Scheibe geführt wird. Diese Schlepplage ist für einen effektiven und geräuscharmen Betrieb der Wischvorrichtung notwendig. Die Umkehrung der Schlepplage erfolgte in der sogenannten Umkehrposition des Wischblatts 10, wenn dieses seine Wischbewegung (Doppelpfeil 29) umkehrt. Dabei führt das Wischblatt eine Auf- Abbewegung aus, welche durch das Umkippen der Wischlippe 28 bedingt ist. Die Aufbewegung erfolgt entgegen Richtung des Pfeiles 24 und somit auch entgegen der Anlegekraft. In der entgegen dem Pfeil 32 gerichteten anderen Wischbewegung ergibt sich somit ein Spiegelbild der Figuren 3 und 4.

Um ein möglichst geräuscharmes Umlegen der Wischlippe 28 aus ihrer einen Schlepplage in ihre andere Schlepplage zu erreichen, wird das zur Verteilung der Anlegekraft (Pfeil 24) dienende Tragelement 12 so ausgelegt, daß der Anlegedruck der Wischleiste 24 beziehungsweise der Wischlippe 28 an der Scheibenoberfläche 26 in deren Mittelabschnitt 36 (Figur 8) größer ist als an wenigsten einen der beiden Endabschnitten 38. Dieser Grundgedanke kann beispielsweise so umgesetzt werden, wie dies in den graphischen Darstellungen gemäß den Figuren 5 bis 7 aufgezeigt ist.

Gemäß Figur 5 ist das Tragelement 12 so ausgelegt, daß über die Länge 40 des Wischblatts gesehen dessen Mittelbereich 36 eine annähernd gleichstarke Anlegekraft (Linie 44) vorhanden ist und daß diese Anlegekraft 44 an den beiden Endabschnitten 38 des Wischblatts stark abfällt. Die strichpunktierte Linie 42 soll eine mögliche Lage des Gelenkbolzens 22, das heißt den Angriffspunkt der vom Wischerarm ausgehenden Anlegekraft zeigen.

Bei einer anderen Ausführungsform (Figur 6) ist das Tragelement 12 so ausgelegt, daß über die Länge 140 des Wischblatts gesehen die Anlegekraft 24 ausgehend von dem einen Ende 138 des Wischblatts bis weit über dessen Anlenkpunkt (Linie 142) hinaus gleichbleibend groß ist (Linie 144), bis sie im Bereich des anderen Ende 139 des Wischblatts stark abfällt. In Figur 6 ist der mögliche Anlenkpunkt des Wischblatts am Wischerarm mit 142 bezeichnet worden.

Eine weitere, in Figur 7 dargestellte mögliche Auslegung des erfindungsgemäßen Wischblatts sieht vor, dass der Anlegedruck oder die Anlegekraft (244) der Wischlippe 28 an der Scheibenoberfläche 26 im Mittelbereich 242 des Wischblatts - Wo sich der Anlenkpunkt des Wischerarms 18 befindet - im wesentlichen gleich groß ist und dass sie zum einen Ende 238 des Wischblatts leicht abfällt, während sie im Bereich des anderen Endes 239 des Wischblatts erheblich geringer wird. Bei dieser Auslegung des Wischblatts ist der Angriffspunkt 243 des Wischerarms 18 am Wischblatt wie bei der Auslegung gemäß Figur 6 außerhalb der Mitte der Wischblattlänge 240 angeordnet. Eine solche Positionierung der Anlenkstelle kann unter Umständen natürlich auch bei Wischblättern die gemäß Figur 5 ausgelegt sind angewendet werden. Die verschiedenen Auslegungen des Wischblatts können durch bestimmte Scheibentypen, die sich beispielsweise durch die Art der sphärischen Krümmungen der Scheiben voneinander unterscheiden, bedingt sein.

Figur 8 zeigt einen möglichen Krümmungsverlauf des Tragelements 12, der eine Druckverteilung der Wischlippe 28 an der Scheibe 15 ergeben kann, wie sie in Figur 5 graphisch dargestellt ist. Bei diesem federelastischen Tragelement 12, das unbelastet eine stärkere Hohlkrümmung gegenüber der Scheibe aufweist als diese im Bereich des vom Wischblatt überstrichenen Wischfeldes gekrümmt ist, ist der Krümmungsverlauf so ausgeführt, dass dieser im Mittelabschnitt 36 des Tragelements stärker ist als an dessen Endabschnitten 38.

Durch die Verringerung der Anlegekraft der Wischlippe 28 an der Scheibenoberfläche 26 im Bereich eines Wischblattendes oder an beiden Wischblattenden wird ein schlagartiges Umspringen oder Umschnappen der Wischlippe 28 aus ihrer einen Schlepplage in ihre andere Schlepplage vermieden. Vielmehr erfolgt beim erfindungsgemäßen Wischblatt ein vergleichsweise sanftes Umlegen der Wischlippe vom Wischblattende aus fortschreitend zur Wischlippenmitte beziehungsweise bis zum anderen Wischlippenende. Die Figuren 3 und 4 zeigen in Verbindung mit Figur 1, dass auch bei sphärisch gekrümmten Scheiben die geringer belasteten Endabschnitte der Wischlippe 28 noch wirksam an der Scheibenoberfläche anliegen. Dies zeigt ein Vergleich der Figuren 3 und 4, aus dem klar ersichtlich ist, dass im geringer belasteten Endbereich (Figur 4) die Wischlippe 28 steiler zur Scheibenobenfläche 26 steht als in deren Mittelabschnitt (Figur 3) wo die größere Anlegekraft zur Wirkung kommt Dieses steilere Anstellen der Wischlippe 28 begünstigt den Beginn des Umlegens der Wischlippe, wenn der Gegenlauf der Wischbewegung (Doppelpfeil 29) einsetzt.

Allen Ausführungsbeispielen ist gemeinsam, dass der Anlegedruck (Pfeil 24) der Wischleiste 14 an der Scheibe 15 in deren Mittelabschnitt 36 größer ist als an wenigstens einem ihrer beiden Endabschnitte 38. Dies gilt auch dann, wenn - abweichend vom gegenständlich gezeigten Wischblatt 10 mit einem einteiligen, als Federschiene dargestelltem Tragelement 12 - das Tragelement mehrteilig aufgebaut ist Entscheidend ist alleine die erfindungsgemäße Verteilung des Anlegedrucks.

## Patentansprüche

1. Wischersystem mit einem Wischblatt (10) für Scheiben (15) von Kraftfahrzeugen, das quer zu seiner Längserstreckung von einem mit diesem verbindbaren, angetriebenen, zur Scheibe belastenden Wischerarm (18) zwischen Umkehrpositionen hin- und hergehend über die Scheiben bewegbar ist und das Wischblatt eine mit einer Wischlippe (28) an der Scheibe anlegbare, langgestreckte Wischleiste (14) hat, an deren von der Scheibe abgewandten Seite ein langgestrecktes, federelastisches, die Verbindungsmittel (16) für den Wischerarm aufweisendes Tragelement (12) zur Verteilung des Anlegedruckes über die gesamte Wischleistenlänge (40) längsachsenparallel angeordnet ist, **dadurch gekennzeichnet, dass** das Tragelement (12) an seiner der Scheibe (15) zugewandten Seite eine Hohlkrümmung aufweist, die stärker ist als die stärkste Krümmung der sphärisch gekrümmten Scheibe (15) im Bereich des vom Wischblatt (10) überstreichbaren Wischfeldes und die Hohlkrümmung im Mittelabschnitt (36) des Tragelements (12) stärker ist als an dessen Endabschnitt/Endabschnitten (38), dass der Anlegedruck der Wischleiste (14) an der Scheibe (15) in dessen Mittelabschnitt (36) größer ist als an wenigstens einem ihrer beiden Endabschnitte (38, 138, 139, 238, 239), dass an diesem mindestens einen Endabschnitt (38, 138, 139, 238, 239) die Wischlippe eine steilere Stellung als an deren Mittelabschnitt einnimmt und der Umlegevorgang der Wischlippe in den Umkehrpositionen des Wischblatts (10) von einer Schlepplage in eine andere Schlepplage im Bereich des verminderten Anlegedrucks einsetzt und sich in den Bereich mit dem größeren Anlegedruck fortsetzt.

2. Wischersystem nach Anspruch 1, **dadurch gekennzeichnet, dass** der Anlegedruck der Wischleiste (14) an der Scheibe (15) an deren beiden Endabschnitten (38) kleiner ist als in deren Mittelabschnitt (36).

3. Wischersystem nach einem der Ansprüche 1 oder 2, **dadurch gekennzeichnet, dass** der Anlegedruck der Wischleiste (14) an der Scheibe (15) in deren Mittelabschnitt (36) zumindest annähernd gleichbleibend groß ist und an dem Endabschnitt/den Endabschnitten abfällt.

## Claims

1. Wiper system having a wiper blade (10) for windows (15) of motor vehicles, which wiper blade (10) can be moved, transversely with respect to its longitudinal extent, over the window in a reciprocating fashion between reversing positions by a driven wiper arm (18) which can be connected to said wiper blade (10) and which exerts a load in the direction of the window, and the wiper blade has an elongate wiping strip (14) which can be placed with a wiping lip (28) against the window, with an elongate, resiliently elastic support element (12), which has the connecting means (16) for the wiper arm and which serves to distribute the contact pressure over the entire wiping strip length (40), being arranged longitudinally axially parallel on that side of said wiping strip (14) which faces away from the window, **characterized in that** the support element (12) has, on its side which faces towards the window (15), a hollow curvature which is more pronounced than the most pronounced curvature of the spherically curved window (15) in the region of the wiping field which can be swept by the wiper blade (10), and the hollow curvature is more pronounced in the central section (36) of the support element (12) than in the end section/end sections (38) of said support element (12), **in that** the contact pressure of the wiping strip (14) against the window (15) is greater in the central section (36) of said wiping strip (14) than at at least one of the two end sections (38, 138, 139, 238, 239) thereof, **in that** the wiping lip assumes a steeper position at said at least one end section (38, 138, 139, 238, 239) than at its central section, and the changeover process of the wiping lip at the reversing positions of the wiper blade (10) from one dragging position into another dragging position is initiated in the region of the reduced contact pressure and continues into the region with the greater contact pressure.

2. Wiper system according to Claim 1, **characterized in that** the contact pressure of the wiping strip (14) against the window (15) is lower at the two end sections (38) of said wiping strip (14) than in its central section (36).

3. Wiper system according to one of Claims 1 or 2, **characterized in that** the contact pressure of the wiping strip (14) against the window (15) is at least approximately uniform in the central section (36) of said wiping strip (14) and falls at the end section/end sections.

## Revendications

1. Système d'essuie-glace comprenant une raclette d'essuie-glace (10) pour des vitres (15) de véhicules automobiles, qui peut être déplacée transversalement à son étendue longitudinale par un bras d'essuie-glace (18) entraîné, pouvant être connecté à celle-ci, pressant contre la vitre, entre des positions d'inversion de va-et-vient sur la vitre, la raclette d'essuie-glace ayant un balai d'essuie-glace allongé (14), pouvant être appliqué avec une lèvre d'essuie-glace (28) contre la vitre, dont le côté opposé à la vitre présente parallèlement à son axe longitudinal, un élément de support allongé (12), élastique à ressort, qui présente les moyens de connexion (16) pour le bras d'essuie-glace et destiné à répartir la pression d'application sur toute la longueur du balai d'essuie-glace (40), **caractérisé en ce que** l'élément de support (12) présente, sur son côté tourné vers la vitre (15), une courbure en creux qui est plus prononcée que la courbure maximale de la vitre (15) de courbure sphérique dans la région du champ de balayage pouvant être parcouru par la raclette d'essuie-glace (10), la courbure en creux étant plus prononcée dans la portion centrale (36) de l'élément de support (12) qu'au niveau de sa portion ou de ses portions d'extrémité (38), **en ce que** la pression d'application du balai d'essuie-glace (14) contre la vitre (15) dans sa portion centrale (36) est supérieure à celle au niveau d'au moins l'une de ses deux portions d'extrémité (38, 138, 139, 238, 239), **en ce que** la lèvre d'essuie-glace adopte une position plus raide au niveau de ladite au moins une portion d'extrémité (38, 138, 139, 238, 239) qu'au niveau de sa portion centrale et l'opération de basculement de la lèvre d'essuie-glace dans les positions d'inversion de la raclette d'essuie-glace (10) d'une position entraînée dans une autre position entraînée s'établit dans la région de la pression d'application réduite et continue dans la région de plus grande pression d'application.

2. Système d'essuie-glace selon la revendication 1, **caractérisé en ce que** la pression d'application du balai d'essuie-glace (14) contre la vitre (15) au niveau de ses deux portions d'extrémité (38) est plus petite qu'au niveau de sa portion centrale (36).

3. Système d'essuie-glace selon l'une quelconque des revendications 1 ou 2, **caractérisé en ce que** la pression d'application du balai d'essuie-glace (14) contre la vitre (15) dans la portion centrale (36) est au moins approximativement constante et diminue au niveau de la ou des portions d'extrémité.
